# EUROPÄISCHE PATENTANMELDUNG

(11) **EP 3 421 851 A1**
(43) Veröffentlichungstag der Anmeldung: **02.01.2019**
(21) Anmeldenummer: 17179074.4
(22) Anmeldetag: 30.06.2017
(51) Int. Cl.: F16K 51/02, F16K 3/18, F16K 3/02, F16K 3/00, F16K 31/122, F16K 37/00

(54) **VAKUUMVENTIL MIT DRUCKSENSOR**

(71) Anmelder: VAT Holding AG, 9469 Haag (CH)
(72) Erfinder: Eschenmoser, Adrian, CH-9472 Grabs (CH); Hofer, Andreas, CH-9469 Widnau (CH)
(74) Vertreter: Kaminski Harmann

(57) **Zusammenfassung**

Die Erfindung betrifft ein Vakuumventil (1) mit einem Ventilverschluss (4) und einer mit dem Ventilverschluss (4) gekoppelten, vorzugsweise pneumatischen oder elektropneumatischen Antriebseinheit (7, 7') mit einem Druckmedium. Das Vakuumventil (1) weist weiter einen Drucksensor (10, 10') auf, so dass ein Druck des Druckmediums messbar ist.

## Beschreibung

Die Erfindung betrifft ein Vakuumventil mit wenigstens einem Drucksensor und ein ebensolches Verfahren.

Allgemein sind Vakuumventile zur Regelung eines Volumen- oder Massenstroms und/oder zum im Wesentlichen gasdichten Schliessen eines Fliesswegs, der durch eine in einem Ventilgehäuse ausgeformte Öffnung führt, in unterschiedlichen Ausführungsformen aus dem Stand der Technik bekannt und kommen insbesondere bei Vakuumkammersystemen im Bereich der IC-, Halbleiter- oder Substratfertigung, die in einer geschützten Atmosphäre möglichst ohne das Vorhandensein verunreinigender Partikel stattfinden muss, zum Einsatz. Derartige Vakuumkammersysteme umfassen insbesondere mindestens eine zur Aufnahme von zu bearbeitenden oder herzustellenden Halbleiterelementen oder Substraten vorgesehene, evakuierbare Vakuumkammer, die mindestens eine Vakuumkammeröffnung besitzt, durch welche die Halbleiterelemente oder anderen Substrate in die und aus der Vakuumkammer führbar sind, sowie mindestens eine Vakuumpumpe zum Evakuieren der Vakuumkammer. Beispielsweise durchlaufen in einer Fertigungsanlage für Halbleiter-Wafer oder Flüssigkristall-Substrate die hochsensiblen Halbleiter- oder Flüssigkristall-Elemente sequentiell mehrere Prozess-Vakuumkammern, in denen die innerhalb der Prozess-Vakuumkammern befindlichen Teile mittels jeweils einer Bearbeitungsvorrichtung bearbeitet werden. Sowohl während des Bearbeitungsprozesses innerhalb der Prozess-Vakuumkammern, als auch während des Transports von Kammer zu Kammer müssen sich die hochsensiblen Halbleiterelemente oder Substrate stets in geschützter Atmosphäre - insbesondere in luftleerer Umgebung - befinden.

Hierfür kommen zum einen Peripherieventile zum Öffnen und Schliessen einer Gaszu- oder -abfuhr und zum anderen Transferventile zum Öffnen und Schliessen der Transferöffnungen der Vakuumkammern für das Ein- und Ausführen der Teile zum Einsatz.

Die von Halbleiterteilen durchlaufenen Vakuumventile werden aufgrund des beschriebenen Anwendungsgebiets und der damit verbundenen Dimensionierung als Vakuum-Transferventile, aufgrund ihres mehrheitlich rechteckigen Öffnungsquerschnitts auch als Rechteckventil und aufgrund ihrer üblichen Funktionsweise auch als Schieberventil, Rechteckschieber oder Transferschieberventil bezeichnet.

Peripherieventile werden insbesondere zur Steuerung oder Regelung des Gasflusses zwischen einer Vakuumkammer und einer Vakuumpumpe oder einer weiteren Vakuumkammer eingesetzt. Peripherieventile befinden sich beispielsweise innerhalb eines Rohrsystems zwischen einer Prozess-Vakuumkammer oder einer Transferkammer und einer Vakuumpumpe, der Atmosphäre oder einer weiteren Prozess-Vakuumkammer. Der Öffnungsquerschnitt derartiger Ventile, auch Pumpenventile genannt, ist in der Regel kleiner als bei einem Vakuum-Transferventil. Da Peripherieventile abhängig vom Einsatzgebiet nicht nur zum vollständigen Öffnen und Schliessen einer Öffnung, sondern auch zum Steuern oder Regeln eines Durchflusses durch kontinuierliches Verstellen des Öffnungsquerschnitts zwischen eine vollständigen Offenstellung und einer gasdichten Geschlossenstellung eingesetzt werden, werden sie auch als Regelventile bezeichnet. Ein mögliches Peripherieventil zur Steuerung oder Regelung des Gasflusses ist das Pendelventil.

Bei einem typischen Pendelventil, wie beispielsweise aus der US 6,089,537 (Olmsted) bekannt, wird in einem ersten Schritt ein in der Regel runder Ventilteller über eine in der Regel ebenfalls runde Öffnung von einer die Öffnung freigebenden Stellung, der Offenposition, in eine die Öffnung überdeckende Zwischenstellung rotatorisch geschwenkt. Im Falle eines Schieberventils, wie beispielsweise in der US 6,416,037 (Geiser) oder der US 6,056,266 (Blecha) beschrieben, ist der Ventilteller, wie auch die Öffnung, meist rechteckig ausgebildet und wird in diesem ersten Schritt linear von einer die Öffnung freigebenden Stellung in eine die Öffnung überdeckende Zwischenstellung geschoben. In dieser Zwischenstellung befindet sich der Ventilteller des Pendel- oder Schieberventils in einer beabstandeten Gegenüberlage zu dem die Öffnung umgebenden Ventilsitz. In einem zweiten Schritt wird der Abstand zwischen dem Ventilteller und dem Ventilsitz verkleinert, so dass der Ventilteller und der Ventilsitz gleichmässig aufeinander gedrückt werden, so dass der Ventilverschluss eine Schliessposition erreicht, in der die Öffnung im Wesentlichen gasdicht verschlossen wird. Diese zweite Bewegung erfolgt vorzugsweise im Wesentlichen in eine senkrechte Richtung zum Ventilsitz.

Die Abdichtung kann z.B. entweder über einen auf der Verschlussseite des Ventiltellers angeordneten Dichtungsring, der auf den die Öffnung umlaufenden Ventilsitz gepresst wird, erfolgen, oder über einen Dichtungsring auf dem Ventilsitz, gegen den die Verschlussseite des Ventiltellers gedrückt wird. Durch den in zwei Schritten erfolgenden Schliessvorgang wird der Abdichtring zwischen dem Ventilteller und dem Ventilsitz kaum Scherkräften, die den Abdichtring zerstören würden, unterworfen, da die Bewegung des Ventiltellers im zweiten Schritt im Wesentlichen geradlinig senkrecht auf den Ventilsitz stattfindet.

Unterschiedliche Dichtvorrichtungen sind aus dem Stand der Technik bekannt, beispielsweise aus der US 6,629,682 B2 (Duelli). Ein geeignetes Material für Dichtungsringe und Dichtungen bei Vakuumventilen ist beispielsweise Fluorkautschuk, auch FKM genannt, insbesondere das unter dem Handelsnamen "Viton" bekannte Fluorelastomer, sowie Perfluorkautschuk, kurz FFKM.

Aus dem Stand der Technik sind unterschiedliche Antriebssysteme zur Erzielung einer beim Pendelventil rotatorischen und beim Schieberventil translatorischen Bewegung des Ventiltellers parallel über die Öffnung und einer im Wesentlichen translatorischen Bewegung senkrecht auf die Öffnung bekannt, beispielsweise aus der US 6,089,537 (Olmsted) für ein Pendelventil und aus der US 6,416,037 (Geiser) für ein Schieberventil.

Die Antriebseinheit stellt dabei die zur Bewegung erforderliche Kraft bzw. Energie beispielsweise mittels eines Elektromotors bereit, welcher den Ventilverschluss antreibt, z.B. über eine Kopplung mit einem Verstellarm. Ebenso sind aus dem Stand der Technik, z.B. der DE 197 46 241 A1, pneumatische Antriebseinheiten bekannt, welche wenigstens eine mit einem Druckmedium betriebene Kolben-Zylinder-Einheit aufweisen, welche mit dem Ventilverschluss gekoppelt ist.

Das Anpressen des Ventiltellers auf den Ventilsitz muss derart erfolgen, dass sowohl die geforderte Gasdichtigkeit innerhalb des gesamten Druckbereichs sichergestellt ist, als auch eine Beschädigung des Abdichtmediums, insbesondere des Abdichtrings in Form eines O-Rings, durch zu grosse Druckbeanspruchung vermieden wird. Um dies zu gewährleisten, sehen bekannte Ventile eine in Abhängigkeit von der zwischen den beiden Ventiltellerseiten herrschenden Druckdifferenz geregelte Anpressdruckregelung des Ventiltellers vor. Besonders bei grossen Druckschwankungen oder dem Wechsel von Unterdruck auf Überdruck, oder umgekehrt, ist eine gleichmässige Kraftverteilung entlang des gesamten Umfangs des Abdichtrings jedoch nicht immer gewährleistbar. Generell wird angestrebt, den Abdichtring von Abstützkräften, die sich aus dem an das Ventil anliegenden Druck ergeben, zu entkoppeln. In der US 6,629,682 (Duelli) wird hierzu z.B. ein Vakuumventil mit einem Abdichtmedium vorgeschlagen, das sich aus einem Abdichtring und einem danebenliegenden Abstützring zusammensetzt, so dass der Abdichtring von Abstützkräften im Wesentlichen befreit ist.

Um die geforderte Gasdichtigkeit, gegebenenfalls sowohl für Über- als auch Unterdruck, zu erreichen, sehen zusätzlich oder alternativ zum zweiten Bewegungsschritt manche bekannte Pendelventile oder Schieberventile einen senkrecht zum Ventilteller verschiebbaren, die Öffnung umgebenden Ventilring vor, der zum gasdichten Schliessen des Ventils auf den Ventilteller gedrückt wird. Derartige Ventile mit relativ zum Ventilteller aktiv verschiebbaren Ventilringen sind beispielsweise aus der DE 1 264 191 B1, der DE 34 47 008 C2, der US 3,145,969 (von Zweck) und der DE 77 31 993 U bekannt. In der US 5,577,707 (Brida) wird ein Pendelventil mit einem eine Öffnung aufweisenden Ventilgehäuse und einem parallel über die Öffnung schwenkbaren Ventilteller zum Steuern eines Durchflusses durch die Öffnung beschrieben. Ein Ventilring, der die Öffnung umschliesst, ist senkrecht in Richtung zum Ventilteller mittels mehrerer Federn und Druckluftzylinder aktiv bewegbar. Eine mögliche Weiterentwicklung dieses Pendelventils wird in der US 2005/0067603 A1 (Lucas et al.) vorgeschlagen.

Da oben genannte Ventile unter anderem bei der Herstellung hochsensibler Halbleiterelemente in einer Vakuumkammer zum Einsatz kommen, muss eine entsprechende Abdichtwirkung auch für solche Prozesskammern verlässlich gewährleistet sein. Hierfür ist insbesondere der Zustand eines Dichtmaterials oder einer bei Verpressung mit dem Dichtmaterial in Kontakt stehenden Dichtfläche von Bedeutung. Im Verlauf der Betriebsdauer eines Vakuumventils können typischerweise Abnutzungen des Dichtmaterials oder der Dichtflächen auftreten.

Weiterhin sind das Antriebssystem bzw. die sich mechanisch bewegenden Bauteile des Ventils fehleranfällig. Z.B. kann es aufgrund von Abnutzungs- oder Alterungserscheinungen oder aufgrund externer Störeinflüsse wie mechanische Schocks und dergleichen zu Beeinträchtigungen der Kolben-Zylinder-Einheit eines pneumatischen Ventilantriebs kommen, beispielsweise in Form von Undichtigkeiten des Kolbens oder einer erhöhten inneren Reibung. Derartige Gegebenheiten können zu Beeinträchtigungen der Abdichtwirkung oder generell der Funktion bzw. Verlässlichkeit des Vakuumventils führen. Bislang gibt es im Stand der Technik keine Möglichkeit, solche Fehler frühzeitig bzw. vorab zu erkennen.

Um die Qualität des Ventils bzw. der Abdichtung auf einem konstant ausreichend hohen Niveau zu halten, erfolgt deshalb eine Wartung des Ventils typischerweise in bestimmten zeitlichen Abständen, häufig, indem Teile des Ventils, wie z.B. die Dichtung, pneumatische Antriebsteile oder das Ventil als Ganzes ausgetauscht bzw. erneuert werden. Ein solcher Wartungszyklus bemisst sich dabei meist an der Anzahl der zu erwartenden Öffnungs- und Schliesszyklen in einem bestimmten Zeitraum. Die Wartung erfolgt also meist vorsorglich um das Eintreten einer Undichtigkeit oder sonstiger Fehlfunktionen vorab weitestgehend ausschliessen zu können.

Ein Nachteil dieser Ventilwartung liegt in deren vorsorglichem Charakter. Die von der Wartung betroffenen Teile werden zumeist vor Ablauf deren regulärer oder tatsächlicher Lebensdauer erneuert oder ersetzt, was einen erhöhten Kostenaufwand bedeutet. Zudem benötigt jeder derartige Wartungsschritt in der Regel eine gewisse Stillstandszeit für einen Produktionsprozess und erhöhnten technischen und finanziellen Aufwand. Dies bedeutet dann in Summe einen Stillstand der Produktion in Abständen, die kürzer sind als erforderlich, und häufiger als dies überhaupt notwendig wäre.

Der Erfindung liegt somit die Aufgabe zugrunde, ein verbessertes Vakuumventil bereitzustellen, welches einen optimierten Betrieb erlaubt.

Eine weitere Aufgabe der Erfindung besteht darin, ein verbessertes Vakuumventil bereitzustellen, welches eine optimierte Ventilwartung und damit eine Verbesserung, d.h. Verkürzung von allfälligen Prozessstillständen, erlaubt. Eine weitere Aufgabe der Erfindung besteht darin, ein verbessertes Vakuumventil bereitzustellen, welches eine Verlängerung, der Lebensdauer von einzelnen Ventilteilen ermöglicht.

Eine weitere Aufgabe der Erfindung ist die Bereitstellung eines verbesserten Verfahrens zur Steuerung eines Vakuumventils.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die grundlegende Idee der vorliegenden Erfindung ist es, ein Vakuumventil mit einer ein Druckmedium aufweisenden, vorzugsweisen pneumatischen oder elektro-pneumatischen, Antriebseinheit mit einem Drucksensor auszustatten, welcher eine Druckmessung des Druckmediums der Antriebseinheit ermöglicht.

Gegenstand der Erfindung ist also ein Vakuumventil, vorzugsweise ein Vakuumschieberventil, Pendelventil oder Monoventil, zur Regelung eines Volumen- oder Massenstroms und/oder zum gasdichten Unterbrechen eines Fliesswegs, mit einem Ventilsitz, der eine eine Öffnungsachse definierende Ventilöffnung und eine die Ventilöffnung umlaufende erste Dichtfläche aufweist. Der Ventilsitz kann hierbei integraler oder struktureller Bestandteil des Vakuumventils sein und insbesondere einen Teil des Ventilgehäuses verkörpern. Alternativ kann der Ventilsitz durch die Öffnung einer Prozesskammer, z.B. einer Vakuumkammer, gebildet sein und unter Zusammenwirkung mit dem relativ zu dem Ventilsitz beweglichen Ventilverschluss ein Vakuumventil im Sinne der vorliegenden Erfindung bilden.

Weiter umfasst das Vakuumventil einen Ventilverschluss, insbesondere einen Ventilteller, zur Regelung des Volumen- oder Massenstroms und/oder zur Unterbrechung des Fliesswegs, mit einer zu der ersten Dichtfläche korrespondierenden zweiten Dichtfläche, deren veränderliche Lage durch eine jeweilige Position und Ausrichtung des Ventilverschlusses bestimmt ist. Zudem weist das Vakuumventil eine mit dem Ventilverschluss gekoppelte Antriebseinheit mit wenigstens einer Kolben-Zylinder-Einheit mit mindestens einem Kolben und einer Zylinderbohrung. Bei der Antriebseinheit handelt es sich vorzugsweise um eine pneumatische oder elekto-pneumatische Form, sie kann aber auch als hydraulische Antriebseinheit ausgebildet sein. Die Antriebseinheit weist weiter ein Druckmedium auf zur Beaufschlagung wenigstens einer druckwirksamen Fläche des Kolbens zum Ausführen einer Verstellbewegung des Ventilverschlusses. Mittels der Antriebseinheit ist so der Ventilverschluss von einer Offenposition, in welcher der Ventilverschluss und der Ventilsitz relativ zueinander kontaktlos vorliegen, in eine Schliessposition, in welcher, insbesondere über eine Dichtung, ein bezogen auf die Öffnungsachse axial dichtender Kontakt zwischen der ersten Dichtfläche und der zweiten Dichtfläche besteht und die Ventilöffnung dadurch gasdicht verschlossen ist, und zurück verstellbar ist.

Optional weist eine oder beide der beiden Dichtflächen eine Dichtung aus Dichtmaterial auf. Das Dichtmaterial kann z.B. ein polymerbasiertes Material (z.B. Elastomer, insbesondere Fluorelastomer) sein, das auf die Dichtfläche aufvulkanisiert ist oder als O-Ring in einer Nut in dem Ventilverschluss oder dem Ventilsitz vorliegt. Als Dichtflächen werden im Rahmen der Erfindung also vorzugsweise diejenigen Flächen betrachtet, bei denen zum Verschliessen der Ventilöffnung (Schliessposition) eine Dichtung aus Dichtmaterial verpresst vorliegt.

Erfindungsgemäss umfasst das Vakuumventil ferner wenigstens einen Drucksensor, wobei der Drucksensor derart ausgebildet und angeordnet ist, dass eine Druckmessung des Druckmediums durchführbar ist.

Das erfindungsgemässe Vakuumventil weist also - vorzugsweise in der Antriebseinheit und dort z.B. integriert in eine Druckmediumsrohr- oder Druckmediumsschlauchleitung der Antriebseinheit - einen Druckmesser auf, der den Druck des Druckmediums, z.B. in bestimmten Zeitabständen, misst. Vorzugsweise ist der Drucksensor ausgebildet zur fortlaufenden Druckmessung des Druckmediums, so dass beispielsweise eine kontinuierliche Überwachung des Druckmediumdrucks erfolgt.

Darüber hinaus ist der Druckmessbereich des Drucksensors optional abgestimmt auf den Druckarbeitsbereich der Antriebseinheit, wobei vorteilhaft eine Reserve für mögliche irreguläre Druckabweichungen vorgehalten wird. Vorzugsweise ist der Drucksensor ausgebildet ist zur Messung eines Druckbereichs zwischen 0 bar und 10 bar, wobei als weitere Option der gemessene Druck in ein digitales Ausgangssignal und/oder eine analoge Ausgangsspannung von vorzugsweise 0 bis 10 Volt gewandelt wird. Ein digitales Ausgangssignal wird dabei vorzugsweise über ein digitales Interface (z.B. SPI oder I2C) übertragen bzw. weitergeleitet. In einigen Ausführungsformen handelt es sich um einen Drucksensor zur absoluten Druckmessung. Zur Druckmessung weist der Drucksensor als Option eine verformbare Membran und/oder einen Piezokristall und/oder einen Quarz- und/oder Piezoresonator auf. Das Funktionsprinzip des Drucksensors ist also dann eine mechanische Verformung einer Membran durch Einwirkung des Druckmediums (und der Erfassung der Verformung beispielsweise durch Induktionsmessung oder Kapazitätsmessung), oder Messung einer elektrischen Ladung bzw. deren Änderung durch Druck- bzw. Krafteinwirkung oder Messung der Änderung eines Schwingverhaltens aufgrund Druckeinwirkung.

In besonders vorteilhaften Ausführungsformen des erfindungsgemässen Vakuumventils ist der Drucksensor ausserhalb eines durch das Vakuumventil definierten von einer äusseren Umgebung abgetrennten Vakuumbereichs angeordnet.

Optional ist der Drucksensor derart im Vakuumventil angeordnet ist, dass wenigstens ein Eingangsdruck der Kolben-Zylinder-Einheit messbar ist. Vorzugsweise ist das Vakuumventil so ausgebildet, dass zwei bzw. beide Eingangsdrücke der Kolben-Zylinder-Einheit messbar sind. Alternativ oder zusätzlich ist der Drucksensor (oder ein weiterer Drucksensor) derart im Vakuumventil angeordnet, dass ein Druck in wenigstens einer Kammer, insbesondere zwei Kammern, des Zylinders messbar ist.

In manchen Ausführungsformen weist das Vakuumventil zwei Kolben-Zylinder-Einheiten zum Verstellen des Ventilverschlusses in zwei unterschiedliche, insbesondere zueinander im Wesentlichen orthogonale, Richtungen auf. Dann weist vorzugsweise jede Kolben-Zylinder-Einheit wenigstens einen Drucksensor zur jeweiligen Druckmessung des jeweiligen Druckmediums oder der jeweiligen Kolben-Zylinder-Einheit bzw. in einem jeweiligen Zylinder(abschnitt) auf. Alternativ weist das Vakuumventil einen ("gemeinsamen") Drucksensor auf, welcher, z.B. durch sequentielles Schalten, zur Druckmessung beider Druckmedien oder beider Kolben-Zylinder-Einheiten ausgebildet ist.

In einer weiteren Fortbildung weist das Vakuumventil ausserdem einen Positionssensor auf, der ausgebildet ist zur, insbesondere fortlaufenden, Messung einer Position des Ventilverschlusses und/oder des Kolbens. Optional sind dabei die Positionsmessung und die Druckmessung derart aufeinander abstimmbar, dass der zur Verstellung des Ventilverschlusses und/oder Kolbens aus einer Ruheposition, vorzugsweise der Offenposition und/oder Schliessposition, notwendige Druck bestimmbar ist. Als weitere Option sind der Drucksensor und der Positionssensor dergestalt ausgebildet, dass sowohl anhand der Druckmessung und als auch anhand der Positionsmessung jeweils eine Bewegung des Ventilverschlusses und/oder des Kolbens ableitbar ist. Beispielsweise sind aus der Druckmessung die auf den Kolben wirkenden Kräfte und damit bei Kenntnis dessen Masse und ggf. weiterer Parameter die (zu erwartende) Bewegung ableitbar und anhand der Position die (tatsächliche) Bewegung (Weg-Zeit-Kennlinie). Als weitere Alternative oder weiterer Zusatz sind der Drucksensor und der Positionssensor dergestalt ausgebildet sind, dass anhand der Druckmessung und der Positionsmessung eine Kraft-Weg-Kennlinie erzeugbar ist. Insbesondere bei Ventilen mit einer Dichtung ist dann eine Kraft-Weg-Kennlinie der Dichtung ermittelbar, deren Auswertung beispielsweise mögliche Veränderungen im Dichtmaterial erkennen lassen kann.

Weiter sind diese Positionsmessung und die erwähnte Druckmessung mittels des Drucksensors derart aufeinander abgestimmt bzw. abstimmbar, dass der zur Verstellung des Ventilverschlusses aus einer Ruheposition, insbesondere der Offen- und/oder Schliessposition, notwendige Druck bestimmbar ist. Es lässt sich somit also z.B. durch parallele Positions- und Druckmessung bestimmen, welchen Druck die Antriebseinheit aufbauen muss, damit sich der Ventilverschluss sich aus der Offen- oder Schliessposition bewegt bzw. zu bewegen beginnt.

Optional wird der Ventilsitz durch einen strukturell mit dem Vakuumventil verbunden Teil des Vakuumventils gebildet, insbesondere wobei der Ventilsitz an einem Gehäuse des Vakuumventils ausgebildet ist, oder von einer Prozesskammer, insbesondere einem Kammergehäuse, bereitgestellt ist.

In einer Ausführungsform weist das Vakuumventil eine Kontroll- und Steuereinheit auf zur Ansteuerung der Antriebseinheit mit vordefinierten Steuerwerten zur Verstellung des Ventilverschlusses zwischen der Offenposition und der Schliessposition, wobei die Antriebseinheit, der Ventilverschluss und der Sensor derart ausgebildet sind und zusammenwirken, dass die Steuerwerte basierend auf dem Messsignal des Drucksensors eingestellt werden, insbesondere derart, dass das Messsignal kontinuierlich einem vordefinierten Sollwert entspricht.

Dabei sind optional das Vakuumventil, die Sensoranordnung und die Kontroll- und Steuereinheit beispielsweise derart konfiguriert, dass der Drucksensor für eine Bereitstellung und Übertragung des Messsignals beispielsweise über eine herkömmliche drahtgebundene oder kabellose Verbindung mit der Kontroll- und Steuereinheit in einseitiger oder zweiseitiger Kommunikation steht.

In einer weiteren Fortbildung weist das Vakuumventil eine derart ausgebildete Verarbeitungseinheit auf, insbesondere bereitgestellt durch die Kontroll- und Steuereinheit oder die Sensoranordnung, dass ein von der Verarbeitungseinheit erfasstes Drucksensormesssignal mittels der Verarbeitungseinheit verarbeitbar ist und anhand des erfassten Drucksensormesssignals eine Zustandsinformation des Vakuumventils ermittelt wird. Die Zustandsinformation wird beispielsweise bezüglich einer mechanischen und/oder strukturellen Integrität der des Ventilverschlusses und/oder der Antriebseinheit bereitgestellt, insbesondere wobei die Zustandsinformation mittels eines Ist-Soll-Vergleichs für das erfasste Drucksensormesssignal ermittelt ist, z.B. basierend auf einem erfassten und einem erwarteten Druck für eine Referenzeinstellung der Antriebseinheit. Optional wird basierend auf einem Abgleich der Zustandsinformation mit vordefinierten Toleranzwerten ein Ausgabesignal bereitgestellt bezüglich einer Bewertung eines durch das Vakuumventil gesteuerten Prozesses, beispielsweise eine Bewertung, ob eine geforderte (Dicht)-wirkung erreicht wird oder es können allfällige Beschädigungen z.B. der Antriebseinheit oder Dichtflächen erkannt werden. Beispielsweise kann dann einem Benutzer durch ein visuelles oder akustisches Signal angezeigt werden, ob ein Prozess innerhalb der geforderten Toleranzen abläuft oder ein unerwünschtes Unter- oder Überschreiten einer solchen Toleranz (z.B. basierend auf der Verstellgeschwindigkeit oder Endlage) zu erwarten ist.

Die vorliegende Erfindung umfasst zudem ein Verfahren zur Steuerung eines Vakuumventils, insbesondere eines Vakuumschieberventils, Pendelventils oder Monoventils, wobei das Vakuumventil ausgebildet ist zur Regelung eines Volumen- oder Massenstroms und/oder zum gasdichten Unterbrechen eines Fliesswegs. Das zu steuernde Vakuumventil weist dabei einen Ventilsitz, der eine eine Öffnungsachse definierende Ventilöffnung und eine die Ventilöffnung umlaufende erste Dichtfläche, einen Ventilverschluss, insbesondere Ventilteller, zur Regelung des Volumen- oder Massenstroms und/oder zur Unterbrechung des Fliesswegs, mit einer zu der ersten Dichtfläche korrespondierenden zweiten Dichtfläche, deren veränderliche Lage durch eine jeweilige Position und Ausrichtung des Ventilverschlusses bestimmt ist. Ferner weist das Ventil wenigstens eine mit dem Ventilverschluss gekoppelte Antriebseinheit mit wenigstens einer Kolben-Zylinder-Einheit mit mindestens einem Kolben und einer Zylinderbohrung auf, wobei die Antriebseinheit weiter ein Druckmedium aufweist zur Beaufschlagung wenigstens einer druckwirksamen Fläche des Kolbens, so dass der Ventilverschluss von einer Offenposition, in welcher der Ventilverschluss und der Ventilsitz relativ zueinander kontaktlos vorliegen, in eine Schliessposition, in welcher, insbesondere über eine Dichtung, ein bezogen auf die Öffnungsachse axial dichtender Kontakt zwischen der ersten Dichtfläche und der zweiten Dichtfläche besteht und die Ventilöffnung dadurch gasdicht verschlossen ist, und zurück verstellbar ist. Die Antriebseinheit ist vorzugsweise als pneumatische oder elektro-pneumatische Einheit ausgebildet, es kann sich jedoch auch um eine hydraulische Einheit handeln.

Erfindungsgemäss wird im Rahmen des Verfahrens, insbesondere fortlaufend, ein Druck des Druckmediums gemessen. Optional wird dabei ein druckabhängiges digitales Ausgangssignal oder eine druckabhängige analoge Ausgangsspannung erzeugt. Die Ausgangsspannung liegt vorzugsweise im Bereich zwischen 0 Volt und 10 Volt.

In einer Fortbildung des Verfahrens wird im Rahmen des Verfahrens basierend auf der Druckmessung eine Zustandsinformation des Vakuumventils, insbesondere bezüglich einer mechanischen und/oder strukturellen Integrität der Antriebseinheit, ermittelt, wobei optional die Zustandsinformation mittels eines Ist-Soll-Vergleichs für das erfasste Messsignal ermittelt ist und/oder basierend auf einem Abgleich der Zustandsinformation mit vordefinierten Toleranzwerten ein Ausgabesignal bereitgestellt wird bezüglich einer Bewertung eines durch das Vakuumventil gesteuerten Prozesses.

In einer weiteren Fortbildung erfolgt im Rahmen des Verfahrens zusätzlich eine mit der Druckmessung gekoppelte Positionsmessung des Ventilsverschlusses und/oder des Kolbens. Optional wird dadurch der zum Verstellen des Ventilverschlusses aus der Offen- und/oder Schliessposition notwendige Druck bestimmt. Als weitere Option erfolgt sowohl anhand der Druckmessung und als auch anhand der Positionsmessung jeweils ein Ableiten oder Bestimmen einer Bewegung des Ventilverschlusses und/oder des Kolbens und weiter ein Vergleich der beiden abgeleiteten Bewegungen hinsichtlich etwaiger Diskrepanzen. Beispielsweise wird anhand des wirkenden Drucks und damit der auf den Kolben wirkenden Kraft unter Kenntnis weiterer Parameter dessen Bewegung berechnet und diese berechnete Bewegung mit der anhand der Positionsmessung bestimmten Bewegung (Position im zeitlichen Verlauf) verglichen. Etwaige Abweichungen lassen z.B. Rückschlüsse auf (Parameter-)Veränderungen des Ventils bzw. der Antriebseinheit zu. Als weitere Option für ein Verfahren mit Druckmessung und Positionsmessung wird anhand der Druckmessung und der Positionsmessung eine Kraft-Weg-Kennlinie erzeugt, insbesondere bei Vorliegen einer Dichtung im Vakuumventil eine Kraft-Weg-Kennlinie der Dichtung.

Gegenstand der vorliegenden Erfindung ist weiters ein Computerprogrammprodukt mit Programmcode, der auf einem maschinenlesbaren Träger, insbesondere einer Steuer- und Verarbeitungseinheit eines erfindungsgemässen Vakuumventils, gespeichert ist, oder Computer-Daten-Signal, verkörpert durch eine elektromagnetische Welle, zur Durchführung des erfindungsgemässen Verfahrens.

Die vorliegende Erfindung stellt also vorteilhaft ein Vakuumventil bereit, welches eine fortlaufende oder kontinuierliche Druckmessung der pneumatischen (oder hydraulischen) Antriebselemente ermöglicht, so dass der Zustand des Antriebs oder der Verstellbewegungen oder - abläufe des Ventils kontrolliert oder überprüft und ggf. bewertet werden können. Weiter erlaubt die Druckmessung eine automatische und fortlaufende Zustandsverifikation des Vakuumventils bzw. einzelner seiner Bauteile, z.B. der Antriebseinheit, deren Leitungen oder Zylinder-KolbenEinheiten, wobei nicht nur direkt Zustandsinformationen über Antriebsteile ermittelbar oder ableitbar sind, sondern indirekt auch über weitere Teile des Vakuumventils, z.B. zusammen mit einer Positionsmessung des Ventilverschlusses eine Haftkraft des Verschlusses auf der Ventilöffnung. Fehler oder Unregelmässigkeiten, die auf zukünftige Fehler deuten, können dabei frühzeitig oder überhaupt erst erkannt werden und/oder unnötige Wartungen aufgrund festgestellter Fehlerfreiheit vermieden werden. Die Überprüfungen können dabei vorteilhaft während der normalen Prozessabläufe erfolgen, so dass diese nicht unterbrochen werden müssen.

Das erfindungsgemässe Vakuumventil wird nachfolgend anhand von in den Zeichnungen schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen.

Im Einzelnen zeigen
- Fig. 1a,b: eine mögliche erste Ausführungsform eines erfindungsgemässen Vakuumventils als Monoventil;
- Fig. 2: eine mögliche zweite Ausführungsform eines erfindungsgemässen Vakuumventils als Monoventil;
- Fig. 3: eine mögliche weitere Ausführungsform eines erfindungsgemässen Vakuumventils als Monoventil; und
- Fig. 4: eine schematische Darstellung einer weiteren erfindungsgemässen Ausführungsform eines Vakuumventils als Transferventil.

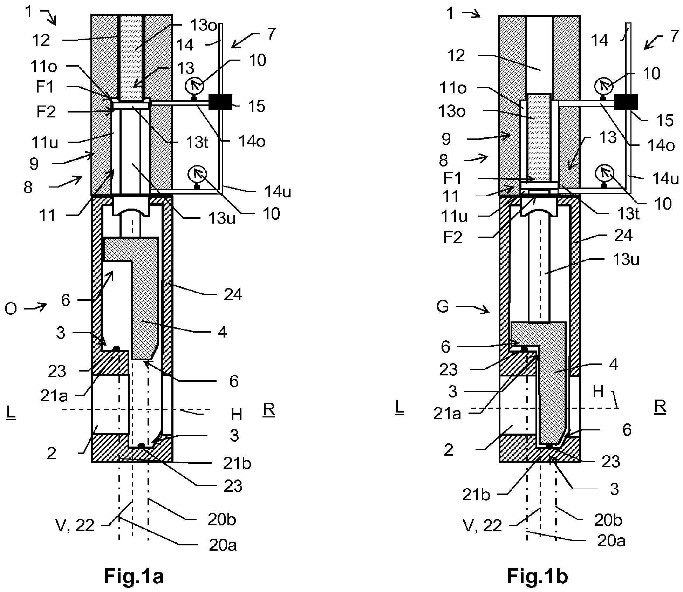

Die **Figuren 1a, 1b** zeigen schematisch eine erste Ausführungsform eines erfindungsgemässen Vakuumventils 1. Im Beispiel ist das Ventil 1 ausgeführt als ein sogenanntes Monoventil und im Querschnitt dargestellt in einer Offenposition O (Fig. 1a) und einer Schliessposition oder Geschlossenposition G (Fig.1b).

Das Ventil 1 zum gasdichten Schliessen eines Fliesswegs mittels einer Linearbewegung besitzt ein Ventilgehäuse 24 mit einer Öffnung 2 für den Fliessweg, wobei die Öffnung 2 eine geometrische Öffnungsachse H entlang des Fliesswegs aufweist. Die Öffnung 2 verbindet einen ersten Gasbereich L, welcher sich in der Zeichnung links des Ventils 1 bzw. einer Trennwand (nicht dargestellt) befindet, mit einem zweiten Gasbereich R rechts davon. Eine solche Trennwand wird z.B. durch eine Kammerwand einer Vakuumkammer gebildet.

Ein Ventilverschluss 4 ist linear entlang einer zu der Öffnungsachse H quer verlaufenden, geometrischen Verstellachse V in einer Verschlusselementebene 22 von einer die Öffnung 2 freigebenden, geöffneten Position O in eine über die Öffnung 2 linear geschobene, geschlossene Position G in eine Schliessrichtung und umgekehrt zurück in eine (zur Schliessrichtung entgegengesetzten) Öffnungsrichtung mittels einer Antriebseinheit 7 verschiebbar.

Im Beispiel umschliesst eine gekrümmte erste Dichtfläche 3 die Öffnung 2 des Ventilgehäuses 24 entlang eines ersten Abschnitts 21a in einer ersten Ebene 20a und entlang eines zweiten Abschnitts 21b in einer zweiten Ebene 20b. Die erste Ebene 20a und die zweite Ebene 20b sind zueinander beabstandet, verlaufen parallel zueinander und parallel zu der Verschlusselementebene 22. Somit weisen der erste Abschnitt 21a und der gegenüberliegende zweite Abschnitt 21b zueinander einen geometrischen Versatz quer zu der Verstellachse V und in Richtung der Öffnungsachse H auf. Zwischen den beiden gegenüberliegenden Abschnitten 21a und 21b in dem sich entlang der Verstellachse V erstreckenden Bereich ist die Öffnung 2 angeordnet.

Das Verschlusselement 4 weist eine zur ersten Dichtfläche 3 korrespondierende zweite Dichtfläche 6 auf, welche entlang zum ersten und zweiten Abschnitt 21a, 21b korrespondierender Abschnitte verläuft. Im Beispiel weist die erste Dichtfläche 3 ein Dichtmaterial 23 auf. Diese Dichtung 23 kann beispielsweise als Polymer mittels Vulkanisation auf den Ventilsitz aufvulkanisiert sein. Alternativ kann die Dichtung 23 z.B. als O-Ring in einer Nut des Ventilsitzes ausgeführt sein. Auch kann ein Dichtmaterial auf den Ventilsitz aufgeklebt sein und dadurch die Dichtung 23 verkörpern. In einer alternativen Ausführungsform kann die Dichtung 23 seitens des Ventilverschlusses 4, insbesondere auf der zweiten Dichtfläche 6, angeordnet sein. Auch Kombinationen dieser Ausführungen sind denkbar. Solche Dichtungen 23 sind selbstverständlich nicht auf das im Beispiel beschriebene Ventil 1 beschränkt, sondern auch bei den weiteren beschriebenen Ventilausführungsformen oder deren Abwandlungen bzw. Kombinationen untereinander anwendbar.

Monoventile, d.h. mittels einer einzigen linearen Bewegung schliessbare Vakuumventile haben beispielsweise den Vorteil eines vergleichsweise einfachen Schliessmechanismus, z.B. verglichen mit den mittels zweier Bewegungen schliessbaren Transferventilen, die einen verhältnismässig komplex aufgebauten Antrieb erfordern. Da das Verschlusselement zudem einteilig ausgebildet sein kann, kann es hohen Beschleunigungskräften ausgesetzt werden, so dass dieses Ventil auch für Schnell- und Notverschlüsse verwendet werden kann. Das Schliessen und Dichten kann mittels einer einzigen linearen Bewegung erfolgen, so dass ein sehr schnelles Schliessen und Öffnen des Ventils 1 möglich ist.

Insbesondere liegt ein Vorteil von Monoventilen beispielsweise darin, dass die Dichtung 3, 6 aufgrund ihres Verlaufs beim Schliessen keiner Querbelastung in Querrichtung zur Längserstreckung der Dichtung 3, 6 unterliegt. Andererseits ist die Dichtung 3, 6 aufgrund Ihrer Quererstreckung zur Öffnungsachse H kaum in der Lage, auf das Verschlusselement 4 entlang der Öffnungsachse H auftretende Kräfte, die insbesondere bei grossem Differenzdruck auf das Verschlusselement 4 wirken können, aufzunehmen, was einen robusten Aufbau des Verschlusselements 4, dessen Antriebs und dessen Lagerung erfordert.

Die Antriebseinheit 7 ist im Beispiel als eine (elektro-) pneumatische Antriebseinheit 7 mit einer Kolben-Zylinder-Einheit 8 ausgebildet. Alternativ handelt es sich bei der Antriebseinheit 7 um eine hydraulische Antriebseinheit. Die Antriebseinheit 7 bzw. die Kolben-Zylinder-Einheit 8 weist eine zweistufige Zylinderbohrung 9 auf, wobei der (in der Zeichnung) "untere" Abschnitt 11 der Bohrung 9 einen grösseren Durchmesser aufweist als der "obere" Abschnitt 12. Im Zylinder 9 ist ein Kolben 13 entlang der Verstellachse V verschiebbar gelagert, der beidseitig je eine Kolbenstange 13u und 13o aufweist, welche durch eine Teller 13t aneinander grenzen, so dass druckwirksame Flächen F1 und F2 bereitgestellt sind. Durch den Teller 13t wird der "untere" Kolbenabschnitt 11 in zwei Kammern 11o und 11u aufgeteilt, die je nach Stellung des Kolbens 13 im Zylinder 9 unterschiedlich gross sind. Die Kolben-Zylinder-Einheit 8 besitzt Dichtungen, doch sind diese hier der Übersichtlichkeit wegen nicht dargestellt. Solche Dichtungen sind am Kolben 13 vorgesehen sowie in und an den Durchführungen für die Kolbenstangen 13u und 13o.

Die Kolben-Zylinder-Einheit 8 wird über eine Druckmediumleitung 14 mit einem Druckmedium beaufschlagt. Im Beispiel handelt es sich bei dem Druckmedium um Druckluft. Je nach Ausführungsform können aber auch andere, für Vakuumventile geeignete gasförmige oder flüssige Druckmedien zum Einsatz kommen. Diese Druckmediumleitung 14 führt über einen "oberen" Leitungszweig 14o in den unteren Abschnitt 11 der Zylinderbohrung 9, welcher in diesen oberhalb der wirksamen Kolbenfläche F1 in die obere Kammer 11o mündet. An die Druckmediumleitung 14 ist ein weiter ein "unterer" Leitungszweig 14u angeschlossen. Dieser Leitungszweig 14u führt ebenfalls in den unteren Teil des Abschnittes 11 der Zylinderbohrung 9, wobei er in diesen unterhalb der druckwirksamen Kolbenfläche F2 in die untere Kammer 11u mündet. Mittels eines Schaltventils 15, z.B. ein 3/2-Wege-Schaltventil, ist somit über den einen Leitungszweig 14o die druckwirksamen Fläche F1 beaufschlagbar und durch entsprechendes Umschalten des Schaltventils 15 über den anderen Leitungszweig 14u die druckwirksame Fläche F2, wobei die jeweilige nicht zur Beaufschlagung herangezogene Leitungszweig entsprechend auf Belüftung geschaltet ist. Somit ist durch Beaufschlagung der Fläche F1 der Kolben 13 und damit der Ventilverschluss 4 aus der in Fig. 1a dargestellten Offenposition O "nach" unten bewegbar, so dass die in Fig. 1b dargestellte Schliessposition G erreicht wird. Durch Umschalten des Schaltventils 15 wird die Fläche F2 beaufschlagt und damit die Bewegung umgekehrt, so dass sich das Vakuumventil 1 öffnet. Alternativ zur dargestellten Form mit beiderseitiger Beaufschlagung des Kolbens sind z.B. auch Ausführungsformen möglich, bei der eine Bewegungsrichtung mittels eines Rückstellelementes wie einer Feder realisiert wird.

Erfindungsgemäss umfasst das Vakuumventil 1 wenigstens einen Drucksensor 10, im Beispiel zwei Drucksensoren 10. Einer der beiden Drucksensoren 10 ist dabei in den "oberen" Leitungszweig 14o integriert, der andere Drucksensor 10 in den "unteren" Leitungszweig 14u. Mittels dieser Drucksensoren 10 wird der jeweilige Druck in den Leitungszweigen 14o, 14u bzw. die beiden Eingangsdrücke der Kolben-Zylindereinheit 8 gemessen. Die Druckmessung erfolgt dabei vorteilhaft fortlaufend, so dass eine Überwachung der Eingangsdrücke ermöglicht ist und ggf. bzw. optional ein Warnsignal bei Über- oder Unterschreiten eines Grenzwertes ausgegeben werden kann.

Der bzw. die Druckmesser 10 sind dabei beispielsweise als resistiver, kapazitiver oder induktiver Membrandruckmesser, als Piezokristalldruckmesser oder als Quarz- oder Piezoresonatordruckmesser ausgebildet. Vorzugsweise ist der jeweilige Druckmesser ausgebildet zum Messen von Drücken zwischen 0 und 10bar und/oder zur Absolutdruckmessung. Der gemessene Druck wird beispielsweise in eine Spannung zwischen 0 und 10V gewandelt und diese zur Druckanzeige verwendet oder einer Datenspeicheranlage und/oder Auswerteeinheit zugeführt. Der Drucksensor 10 bzw. die Kolben-Zylinder-Einheit 8 ist dabei optional ausserhalb des Vakuumbereichs angeordnet, was die Ansprüche an deren technische Auslegung verringert und damit vereinfacht.

Eine erfindungsgemässe Antriebseinheit 7 bzw. ein erfindungsgemässes Vakuumventil 1 mit einem Druckmesser 10 zur Druckmessung des Druckmediums kann alternativ zur Darstellung natürlich auch ausgebildet sein zur Erzeugung einer zumindest im Wesentlichen rotatorischen Verstellbewegung des Ventilverschlusses 4 anstelle der oder zusätzlich zur gezeigten linearen Verstellbewegung und/oder zur Erzeugung einer Kombination einer Linear- mit einer Drehbewegung.

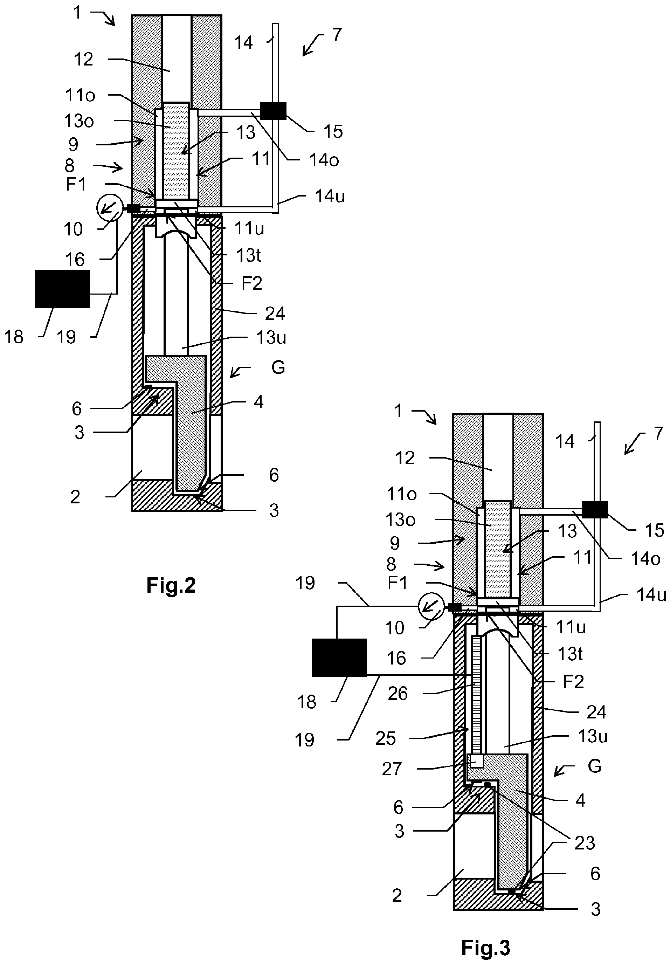

Fig. 2 zeigt im Querschnitt ein Schema einer alternativen erfindungsgemässen Ausführungsform eines Monoventils 1, wobei das Ventil 1 in der Geschlossenposition G dargestellt ist. Im Unterschied zur Ausführungsform nach den Fig. 1a, 1b weist das Ventil 1 nur einen Drucksensor 10 auf, welcher nicht in den Druckleitungen 14o oder 14u integriert ist, sondern derart angeordnet ist, dass der Druck in der unteren Kammer 11u des Zylinders 9 messbar ist. Hierzu ist der Druckmesser 10 im Beispiel an der Gehäusewand 24 angebracht und über eine Öffnung 16 in der Wand 24 mit der Kammer 11u verbunden, so dass deren Druck vom Sensor 10 gemessen werden kann. Alternativ zur dargestellten Ausführungsform weist das Ventil 1 für beide Kammern 11u und 11o jeweils einen Drucksensor 10 auf oder der eine Drucksensor 10 ist wechselweise, z.B. mit Hilfe eines zusätzlichen Schaltventils, mit jeweils einer der beiden Kammern 11o und 11u verbunden und misst wechselweise den jeweiligen Kammerndruck, beispielsweise den Druck der "unteren" Kammer 11u beim Wechsel von der Schliessposition G zur Offenposition O und umgekehrt den Druck der "oberen" Kammer 11o beim Verstellen von der Offenposition O zur Schliessposition G.

Im Beispiel ist der Drucksensor 10 über eine Datenleitung 19 mit einer elektronischen Verarbeitungseinheit 18 verbunden, so dass die Messdaten des Sensors 10 (z.B. Spannungswerte) von der Verarbeitungseinheit 18 erfasst, gespeichert und ausgewertet werden können. Bei der Verarbeitungseinheit 18 handelt es sich um eine externe Einheit oder vorzugsweise eine in das Vakuumventil 1 integrierte Einheit. Anstelle eines Datenkabels 19 sind Drucksensor 10 und die Auswerteeinheit 18 zur kabellosen Datenübertragung ausgebildet, z.B. per Funk, WiFi oder Bluetooth, was besonders bei einer (grossen) räumlichen Trennung von Auswerteeinheit 18 und Drucksensor 10 von Vorteil ist.

Die Datenverarbeitungseinheit 18 ist dabei im Beispiel ausgebildet, die erfassten Messsignale des Drucksensors 10 zu verarbeiten und anhand des bzw. der Messsignale eine Zustandsinformation des Vakuumventils 1 zu ermitteln. Die Zustandsinformation bezieht sich vorzugsweise auf eine mechanische bzw. strukturelle Integrität des Ventilverschlusses 4 und/oder der Antriebseinheit 7, beispielsweise hinsichtlich Altersermüdungen, Abnutzungseffekte oder einer Dichtheit der Antriebseinheit 7 bzw. der Kolben-Zylinder-Einheit 8. Die Zustandsinformation wird dabei als Option mittels eines Ist-Soll-Vergleichs eines oder mehrerer Drucksensormesssignale ermittelt, also indem Abweichungen von einem Referenzsignalwert festgestellt werden. Dabei wird als weitere Option ein Abgleich vorgenommen mit einem oder mehreren voreingestellten Toleranzwerten. Wird der Toleranzwert unter- oder überschritten, kann dabei ein Ausgabesignal ausgegeben werden. Abweichungen bzw. Grenzwertüberschreitungen können dabei Hinweise auf Störungen oder Fehler im Vakuumventil 1 sein und insbesondere dazu dienen, solche sehr frühzeitig, noch bevor Beeinträchtigungen der eigentlichen Funktion des Ventils 1 eintreten, oder auch auf Störungen oder Fehler der durch das Ventil 1 kontrollierten Gasbereiche bzw. Vakuumkammern.

**Fig. 3** zeigt eine Fortbildung des Vakuumventils 1 nach Figur 2. Im vorliegenden Beispiel weist das Ventil 1 zusätzlich einen Positionssensor 25 auf mit einem abtastenden Lineal 26, welches fix im Vakuumventil 1 so angeordnet ist, dass es ein Target 27, welches am Ventilverschluss 4 angeordnet ist und mit diesem verstellbar ist, erfasst. Der Positionssensor 25 misst also, vorzugsweise fortlaufend, die Position des Ventilverschlusses 4 innerhalb des Ventils 1. Das Messsignal des Positionssensors 25 wird wie dasjenige des Drucksensors 10 der Auswerteeinheit 18 mittels Datenkabel 19 zugeführt.

Die Positionsmessung und die Druckmessung sind dabei derart aufeinander abgestimmt (z.B. einfach durch fortlaufende Messungen mit ausreichend hoher Taktung, so dass zumindest quasi-synchrone Erfassung des Drucks und der Position erfolgt oder mittels eines Triggers zur Triggerung der beiden Messwertaufnehmer 10 und 25) bzw. die Auswerteeinheit 18 ist so konfiguriert, dass die Druckmesswerte mit den Positionsmesswerten (zeitlich) korreliert werden. Dadurch lässt sich beispielsweise als Zustandsinformation feststellen, welcher Druck (in der jeweiligen Druckleitung 14o, 14u bzw. der jeweiligen Kammer 11o, 11u) aufgebaut werden muss, bis sich der Kolben 13 (und damit der Ventilverschluss 4) zu bewegen beginnt. Damit sind z.B. Rückschlüsse auf die Haftreibung im Zylinder 9 möglich und/oder bei längerer, vorzugsweise automatischer, zeitlicher Überwachung des notwendigen Mindestverstelldrucks etwaige Veränderungen im Laufe der Zeit feststellbar. Wird beispielsweise festgestellt, dass sich der zum Verstellen bzw. Öffnen und/oder Schliessen des Ventils 1 erforderliche Mindestdruck im Laufe der Zeit erhöht, kann dies ein Hinweis auf Verschleisserscheinungen im Ventil 1 sein und von der Auswerteeinheit 18 ein Ausgabesignal ausgegeben werden, welches auf eine notwendige Wartung hinweist.

Weist das Vakuumventil 1 wie im Beispiel eine Dichtung 23 auf, kann dabei anhand der Druckmessung und der Positionsmessung eine Kraft-Weg-Kennlinie speziell für die Dichtung 23 erstellt werden (z.B. einfach als Ausschnitt einer Kraft-Weg-Kennlinie für die gesamte Schliess- oder Öffnungsbewegung). Somit liegt dann eine charakteristische Elastomerkennlinie vor. Deren Auswertung, vor allem die Beobachtung etwaiger Veränderungen der Kennlinie im Laufe der Zeit lassen Rückschlüsse z.B. auf Alterungserscheinungen oder Verschleiss der Dichtung 23 zu.

Als weiterer Vorteil einer kombinierten Druck- und Positionsmessung ergibt sich, dass die aufgrund des gemessenen Drucks auf den Kolben 13 (und damit der auf den Kolben 13 wirkenden Kraft) zu erwartende Bewegung mit dessen tatsächlicher Bewegung, welche mit der Positionsmessung vorliegt, verglichen werden kann. Hierzu erfolgt für das Ventil 1 beispielsweise abweichend zur Darstellung der Figur 3 eine Druckmessung in beiden Kammern 11o und 11u, so dass die auf den Kolben 13 wirkenden Kräfte genau bekannt sind. Sind nun Diskrepanzen der daraus (und aus Kenntnis der Masse des Kolbens 13 und des Verschlusses 4 etc.) abgeleiten (quasi theoretischen) Bewegung zu der aus der Positionsmessung feststellbaren Bewegung erkennbar, so kann daraus z.B. auf zusätzlich wirkende äussere Kräfte oder unerwartete Reibung in der Antriebseinheit geschlossen werden.

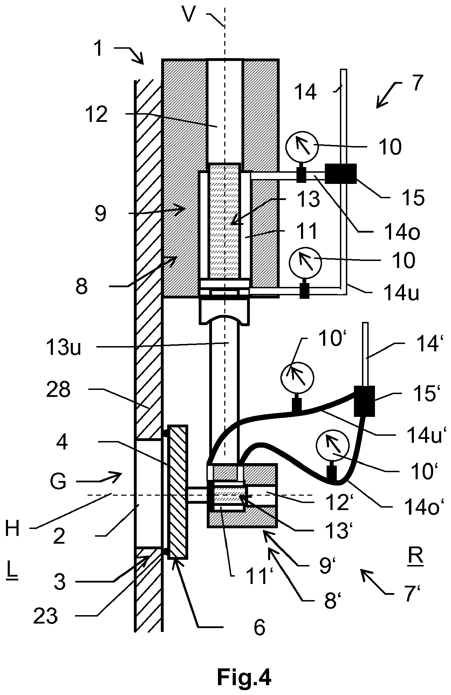

**Fig. 4** zeigt eine weitere erfindungsgemässe Ausführungsform eine Vakuumventils 1, welches im Beispiel ausgebildet ist als Transferventil, dargestellt in der Schliessposition G.

Das gezeigte Transferventil ist eine Sonderform eines Schieberventils. Das Vakuumventil hat ein rechteckiges, plattenförmiges Verschlusselement 4 (z.B. Ventilteller), das eine Dichtfläche 6 zum gasdichten Verschliessen einer Öffnung 2 aufweist. Die Öffnung 2 hat einen dem Verschlusselement 4 entsprechenden Querschnitt und ist in einer Wand 28 ausgeformt. Die Öffnung 2 ist von einem Ventilsitz, der seinerseits ebenfalls eine mit der Dichtfläche 6 des Verschlusselements 4 korrespondierende Dichtfläche 3 bereitstellt, umgeben. Die Dichtfläche 6 des Verschlusselements 4 umläuft das Verschlusselement 4 und weist ein Dichtmaterial (Dichtung) 23 auf. In einer Geschlossenposition G werden die Dichtflächen 6, 3 aufeinander gedrückt und das Dichtmaterial 23 wird dabei verpresst.

Die Öffnung 2 verbindet einen ersten Gasbereich L, welcher sich auf der einen Seite der Wand 28 befindet, mit einem zweiten Gasbereich R auf der anderen Seite der Wand 28. Die Wand 28 wird z.B. durch eine Kammerwand einer Vakuumkammer gebildet. Das Vakuumventil 1 wird dann durch ein Zusammenwirken der Kammerwand 28 mit dem Verschlusselement 4 gebildet.

Das Vakuumventil 1 weist eine erste Antriebseinheit 7 und eine zweite Antriebseinheit 7' auf, wobei im Beispiel beide Antriebseinheiten 7, 7' als pneumatische Antriebseinheiten ausgebildet sind. Das Verschlusselement 4 ist über eine zweite Zylinder-Kolben-Einheit 8' der zweiten pneumatischen Antriebseinheit 7' am unteren Ende 13u des Kolbens 13 der ersten Antriebseinheit 7 angeordnet. Die erste Antriebseinheit 7 sorgt für die "vertikale" Bewegung des Ventilverschlusses 4 (also das Verstellen entlang der "vertikalen" Verstellachse V), die zweite Antriebseinheit 7', welche dem Prinzip nach den gleichen Aufbau wie die erste Antriebseinheit 7 aufweist, für dessen "horizontale" Bewegung (Verstellen entlang der "horizontalen" Verstellachse H).

In der (nicht dargestellten) Offenposition O befindet sich das Verschlusselement 4 ausserhalb des Projektionsbereichs der Öffnung 2 und gibt diese vollständig frei. Durch Verstellen des Kolbens 13 in axiale Richtung parallel zu der ersten, "vertikalen" Verstellachse V und parallel zu der Wand 28 kann das Verschlusselement 4 mittels der Antriebseinheit 7 von der Offenposition O in eine Zwischenposition verstellt werden. In dieser Zwischenposition überdeckt die Dichtfläche 6 des Verschlusselements 4 die Öffnung 2 und befindet sich in beabstandeter Gegenüberlage zu der die Öffnung 2 umgebenden Dichtfläche 3 des Ventilsitzes.

Durch Verstellen des Kolbens 13' der zweiten Antriebseinheit 7'in Richtung der zweiten, "horizontalen" Verstellachse H (quer zur ersten Verstellachse V), also z.B. senkrecht zur Wand 28 und zum Ventilsitz, kann das Verschlusselement 4 von der Zwischenposition in die dargestellte Geschlossenposition G verstellt werden.

In der Geschlossenposition G verschliesst das Verschlusselement 4 die Öffnung 2 gasdicht und trennt somit den ersten Gasbereich L von dem zweiten Gasbereich R gasdicht.

Das Öffnen und Schliessen des Vakuumventils erfolgt also mittels der Antriebseinheiten 7 und 7' durch eine L-förmige Bewegung in zwei zueinander senkrechte Richtungen H, V des Verschlusselements 4. Daher wird das gezeigte Transferventil auch L-Typ-Ventil genannt.

Ein Transferventil 1 wie gezeigt wird typischerweise zur Abdichtung eines Prozessvolumens (Vakuumkammer) und zur Beund Entladung des Volumens vorgesehen. Häufige Wechsel zwischen der Offenposition und der Geschlossenposition G sind bei einem solchen Einsatz die Regel. Hierdurch können verstärkte Abnutzungserscheinungen der Dichtflächen 6, 3 und der mechanische bewegten Bauteile, z.B. der Dichtungen der jeweiligen Kolben-Zylinder-Einheit 8, 8' oder anderer Teile der Antriebseinheiten 7, 7' eintreten.

Erfindungsgemäss weist das Vakuumventil 1 Druckmesser 10 und 10' sowohl für das "vertikale" als auch das "horizontale" Antriebssystem auf, womit der Druck des jeweiligen Druckmediums gemessen wird. Im Bespiel der vorliegenden Figur 4 sind die Druckmesser 10, 10' dabei analog der Ausführungsform nach den Figuren 1a, 1b in die jeweiligen Rohrleitungen 14o, 14u bzw. Schlauchleitungen 14o' und 14u' integriert, welche den jeweiligen Zylinder 9 bzw. 9' versorgen. Durch ein derart ausgebildetes Transferventil 1 lässt sich somit vorteilhaft der Druck (z.B. Eingangsdrücke oder Drücke in den jeweiligen Zylindern 9. 9' bzw. deren jeweiligen Kammern sowohl der "horizontalen" als auch der "vertikalen" Antriebseinheit 7' bzw. 7 messen oder überwachen.

Anstelle zweier separater Antriebseinheiten 7, 7' wie dargestellt kann auch eine Antriebseinheit zum Einsatz kommen, welche z.B. zwei Kolben-Zylinder-Einheiten 8, 8' aufweist, welche über ein gemeinsames Druckluftleitungssystem versorgt werden, wie dies in einer möglichen Form z.B. in der DE 197 46 241 A1 beschrieben ist. In derartigen Ausführungsformen erfolgt eine Druckmessung ggf. dann mit weniger als vier Drucksensoren 10, 10', z.B. mit zwei Drucksensoren, die den jeweiligen Druck der jeweiligen "vertikalen" oder "horizontalen" Antriebsuntereinheit sequentiell messen.

Es versteht sich, dass diese dargestellten Figuren nur mögliche Ausführungsbeispiele schematisch darstellen. Die verschiedenen Ansätze können ebenso miteinander sowie mit Verfahren und Vorrichtungen des Stands der Technik, z.B. mit einem sogenannten Pendelventil, kombiniert werden.

## Patentansprüche

1. Vakuumventil (1), insbesondere Vakuumschieberventil, Pendelventil oder Monoventil, zur Regelung eines Volumen- oder Massenstroms und/oder zum gasdichten Unterbrechen eines Fliesswegs, mit
• einem Ventilsitz, der eine eine Öffnungsachse (H) definierende Ventilöffnung (2) und eine die Ventilöffnung (2) umlaufende erste Dichtfläche (3) aufweist,
• einem Ventilverschluss (4), insbesondere Ventilteller, zur Regelung des Volumen- oder Massenstroms und/oder zur Unterbrechung des Fliesswegs, mit einer zu der ersten Dichtfläche (3) korrespondierenden zweiten Dichtfläche (6), deren veränderliche Lage durch eine jeweilige Position und Ausrichtung des Ventilverschlusses (4) bestimmt ist,
• wenigstens einer mit dem Ventilverschluss (4) gekoppelten, insbesondere pneumatischen oder elektro-pneumatischen, Antriebseinheit (7, 7') mit wenigstens einer Kolben-Zylinder-Einheit (8, 8') mit mindestens einem Kolben (13, 13') und einer Zylinderbohrung (9, 9'), wobei die Antriebseinheit (7, 7') weiter ein Druckmedium aufweist zur Beaufschlagung wenigstens einer druckwirksamen Fläche (F1, F2) des Kolbens (13, 13"), so dass mittels der Antriebseinheit (7, 7') der Ventilverschluss (4) von
□ einer Offenposition (O), in welcher der Ventilverschluss (4) und der Ventilsitz relativ zueinander kontaktlos vorliegen, in
□ eine Schliessposition (G), in welcher, insbesondere über eine Dichtung (23), ein bezogen auf die Öffnungsachse (H) axial dichtender Kontakt zwischen der ersten Dichtfläche (3) und der zweiten Dichtfläche (6) besteht und die Ventilöffnung (2) dadurch gasdicht verschlossen ist,
und zurück verstellbar ist,
**dadurch gekennzeichnet, dass**
das Vakuumventil (1) ferner wenigstens einen Drucksensor (10, 10') umfasst, wobei der Drucksensor (10, 10') derart ausgebildet und, insbesondere in der Antriebseinheit (7, 7'), angeordnet ist, dass eine Druckmessung des Druckmediums durchführbar ist.

2. Vakuumventil nach Anspruch 1,
**dadurch gekennzeichnet, dass**
die Antriebseinheit (7, 7') wenigstens eine Schlauch- oder Rohrleitung (14, 14o, 14u, 14', 14o', 14u') für das Druckmedium aufweist und der Drucksensor (10, 10') in die Schlauch- oder Rohrleitung (14, 14o, 14u, 14', 14o', 14u') integriert ist.

3. Vakuumventil nach Anspruch 1 oder 2,
**dadurch gekennzeichnet, dass**
der Drucksensor (10, 10') ausgebildet ist
• zur fortlaufenden Druckmessung des Druckmediums und/oder
• zur Messung eines Druckbereichs zwischen 0 und 10 bar und/oder
• zur absoluten Druckmessung.

4. Vakuumventil nach einem der vorhergehenden Ansprüche, **dadurch gekennzeichnet, dass**
der Drucksensor (10, 10') zur Druckmessung eine verformbare Membran und/oder einen Piezokristall und/oder einen Quarz- und/oder Piezoresonator aufweist.

5. Vakuumventil nach einem der vorhergehenden Ansprüche, **dadurch gekennzeichnet, dass**
• der Drucksensor (10, 10') ausserhalb eines durch das Vakuumventil (1) definierten von einer äusseren Umgebung abgetrennten Vakuumbereichs angeordnet ist und/oder
• der Ventilsitz durch einen strukturell mit dem Vakuumventil (1) verbunden Teil des Vakuumventils (1) gebildet wird, insbesondere wobei der Ventilsitz an einem Gehäuse (24) des Vakuumventils (1) ausgebildet ist, oder von einer Prozesskammer, insbesondere einem Kammergehäuse, bereitgestellt ist.

6. Vakuumventil nach einem der vorhergehenden Ansprüche, **dadurch gekennzeichnet, dass**
der Drucksensor (10, 10') derart im Vakuumventil (1) angeordnet ist, dass
• wenigstens ein Eingangsdruck der Kolben-Zylinder- Einheit (8, 8') messbar ist, insbesondere beide Eingangsdrücke messbar sind, und/oder
• ein Druck in wenigstens einer Kammer (11o, 11u), insbesondere zwei Kammern (11o, 11u), der Zylinderbohrung (9, 9') messbar ist.

7. Vakuumventil nach einem der vorhergehenden Ansprüche, **dadurch gekennzeichnet, dass**
das Vakuumventil (1) zwei Kolben-Zylinder-Einheiten (8, 8') zum Verstellen des Ventilverschlusses (4) in zwei unterschiedliche, insbesondere zueinander im Wesentlichen orthogonale, Richtungen aufweist, wobei jede Kolben-Zylinder-Einheit (8, 8') wenigstens einen Drucksensor (10, 10') zur jeweiligen Druckmessung aufweist.

8. Vakuumventil nach einem der vorhergehenden Ansprüche, **dadurch gekennzeichnet, dass**
das Vakuumventil (1) ausserdem einen Positionssensor (25) aufweist, welcher ausgebildet ist zur, insbesondere fortlaufenden, Messung einer Position des Ventilverschlusses (4) und/oder des Kolbens (13,13'), insbesondere wobei
• die Positionsmessung und die Druckmessung derart aufeinander abstimmbar sind, dass der zur Verstellung des Ventilverschlusses (4) und/oder Kolbens (13, 13') aus einer Ruheposition, insbesondere der Offenposition (O) und/oder Schliessposition (G), notwendige Druck bestimmbar ist, und/oder
• der Drucksensor (10, 10') und der Positionssensor (25) dergestalt ausgebildet sind, dass sowohl anhand der Druckmessung und als auch anhand der Positionsmessung jeweils eine Bewegung des Ventilverschlusses (4) und/oder des Kolbens (13,13') ableitbar ist und/oder
• der Drucksensor (10, 10') und der Positionssensor (25) dergestalt ausgebildet sind, dass anhand der Druckmessung und der Positionsmessung eine Kraft-Weg-Kennlinie erzeugbar ist, insbesondere bei Vorliegen einer Dichtung (23) eine Kraft-Weg-Kennlinie der Dichtung (23).

9. Vakuumventil nach einem der vorhergehenden Ansprüche, **dadurch gekennzeichnet, dass**
das Vakuumventil (1) eine derart ausgebildete Verarbeitungseinheit (18) aufweist, dass ein erfasstes Drucksensormesssignal mittels der Verarbeitungseinheit (18) verarbeitbar ist und anhand des erfassten Drucksensormesssignals eine Zustandsinformation des Vakuumventils (1) ermittelt wird.

10. Vakuumventil nach Anspruch 9,
**dadurch gekennzeichnet, dass**
die Zustandsinformation bezüglich einer mechanischen und/oder strukturellen Integrität der des Ventilverschlusses (4) und/oder der Antriebseinheit (7, 7') bereitgestellt wird, insbesondere wobei die Zustandsinformation mittels eines Ist-Soll-Vergleichs für das erfasste Drucksensormesssignal ermittelt ist.

11. Vakuumventil nach Anspruch 9 oder 10,
**dadurch gekennzeichnet, dass**
basierend auf einem Abgleich der Zustandsinformation mit vordefinierten Toleranzwerten ein Ausgabesignal bereitgestellt wird bezüglich einer Bewertung eines durch das Vakuumventil (1) gesteuerten Prozesses.

12. Verfahren zur Steuerung eines Vakuumventils (1), insbesondere eines Vakuumschieberventils, Pendelventils oder Monoventils, wobei das Vakuumventil (1) ausgebildet ist zur Regelung eines Volumen- oder Massenstroms und/oder zum gasdichten Unterbrechen eines Fliesswegs und das Vakuumventil (1) aufweist
• einen Ventilsitz, der eine eine Öffnungsachse (H) definierende Ventilöffnung (2) und eine die Ventilöffnung (2) umlaufende erste Dichtfläche (3),
• einen Ventilverschluss (4), insbesondere Ventilteller, zur Regelung des Volumen- oder Massenstroms und/oder zur Unterbrechung des Fliesswegs, mit einer zu der ersten Dichtfläche (3) korrespondierenden zweiten Dichtfläche (6), deren veränderliche Lage durch eine jeweilige Position und Ausrichtung des Ventilverschlusses (4) bestimmt ist,
• wenigstens einer mit dem Ventilverschluss (4) gekoppelten, insbesondere pneumatischen oder elektro-pneumatischen, Antriebseinheit (7, 7') mit wenigstens einer Kolben-Zylinder-Einheit (8, 8') mit mindestens einem Kolben (13, 13') und einer Zylinderbohrung (9, 9'), wobei die Antriebseinheit (7, 7') weiter ein Druckmedium aufweist zur Beaufschlagung wenigstens einer druckwirksamen Fläche (F1, F2) des Kolbens (13, 13"), so dass mittels der Antriebseinheit (7, 7') der Ventilverschluss (4) von
einer Offenposition (O), in welcher der Ventilverschluss (4) und der Ventilsitz relativ zueinander kontaktlos vorliegen, in
□ eine Schliessposition (G), in welcher, insbesondere über eine Dichtung (23), ein bezogen auf die Öffnungsachse (H) axial dichtender Kontakt zwischen der ersten Dichtfläche (3) und der zweiten Dichtfläche (6) besteht und die Ventilöffnung (2) dadurch gasdicht verschlossen ist,
und zurück verstellbar ist,
**dadurch gekennzeichnet, dass**
das im Rahmen des Verfahrens, insbesondere fortlaufend, ein Druck des Druckmediums gemessen wird, insbesondere wobei ein druckabhängiges digitales Ausgangssignal oder eine druckabhängige Ausgangsspannung, im Speziellen im Bereich zwischen 0 Volt und 10 Volt, erzeugt wird.

13. Verfahren nach Anspruch 12,
**dadurch gekennzeichnet, dass**
im Rahmen des Verfahrens basierend auf der Druckmessung eine Zustandsinformation des Vakuumventils (1), insbesondere bezüglich einer mechanischen und/oder strukturellen Integrität der Antriebseinheit (7, 7'), ermittelt wird, insbesondere wobei
• die Zustandsinformation mittels eines Ist-Soll-Vergleichs für ein erfasstes Druckmesssignal ermittelt ist und/oder
• basierend auf einem Abgleich der Zustandsinformation mit vordefinierten Toleranzwerten ein Ausgabesignal bereitgestellt wird bezüglich einer Bewertung eines durch das Vakuumventil (1) gesteuerten Prozesses.

14. Verfahren nach Anspruch 12 oder 13,
**dadurch gekennzeichnet, dass**
im Rahmen des Verfahrens zusätzlich eine mit der Druckmessung gekoppelte Positionsmessung des Ventilsverschlusses (4) und/oder des Kolbens (13, 13') erfolgt, insbesondere wobei
• anhand der Druckmessung und der Positionsmessung der zum Verstellen des Ventilverschlusses (4) und/oder des Kolbens (13, 13') aus der Offenposition (O) und/oder Schliessposition (G) notwendige Druck bestimmt wird, und/oder
• sowohl anhand der Druckmessung und als auch anhand der Positionsmessung jeweils eine Bewegung des Ventilverschlusses (4) und/oder des Kolbens (13,13') abgeleitet wird und ein Vergleich der beiden abgeleiteten Bewegungen hinsichtlich etwaiger Diskrepanzen erfolgt, und/oder
• anhand der Druckmessung und der Positionsmessung eine Kraft-Weg-Kennlinie erzeugt wird, insbesondere bei Vorliegen einer Dichtung (23) eine Kraft-Weg-Kennlinie der Dichtung (23).

15. Computerprogrammprodukt mit Programmcode, der auf einem maschinenlesbaren Träger, insbesondere einer Steuer- und Verarbeitungseinheit eines Vakuumventils (1) nach Anspruch 1, gespeichert ist, oder Computer-Daten-Signal, verkörpert durch eine elektromagnetische Welle, zur Durchführung des Verfahrens nach Anspruch 12.
